# FASCICULE DE BREVET EUROPEEN

(11) **EP 3 123 235 B1**
(45) Date de publication et mention de la délivrance du brevet: **11.07.2018**
(21) Numéro de dépôt: 15712388.6
(22) Date de dépôt: 27.03.2015
(51) Int. Cl.: G02B 15/14, G02B 26/08, G02B 27/64, H04N 5/225, H04N 5/232, H04N 7/18

(54) **SYSTEME DE VEILLE OPTRONIQUE A CHAMP OPTIQUE VARIABLE**
OPTOELEKTRONISCHES ÜBERWACHUNGSSYSTEM MIT VARIABLEM OPTISCHEM FELD
OPTOELECTRONIC SURVEILLANCE SYSTEM WITH VARIABLE OPTICAL FIELD

(30) Priorité: 28.03.2014 FR 1452727
(43) Date de publication de la demande: 01.02.2017
(73) Titulaire: Safran Electronics & Defense, 92100 Boulogne-Billancourt (FR)
(72) Inventeur: BOEHM, Bernard, 92100 Boulogne-Billancourt (FR); ECHARD, Paul, 92100 Boulogne-Billancourt (FR)
(74) Mandataire: Lavialle, Bruno François Stéphane
(86) Numéro de dépôt international: PCT/EP2015/056808
(87) Numéro de publication internationale: WO 2015/144920

(56) Documents cités:
- JP-A- 2005 175 970
- US-A1- 2009 122 406
- US-A1- 2012 099 852
- US-B1- 6 486 910

## Description

La présente invention concerne le domaine des appareils d'observation visuelle de jour ou de nuit et, plus particulièrement, un système de veille optronique dans le domaine du visible ou de l'infrarouge.

Un tel système de veille optronique est notamment utilisé pour assurer la surveillance de l'espace environnant un véhicule, notamment terrestre ou maritime, afin de détecter l'apparition d'un obstacle, d'un autre véhicule ou d'un projectile dans la zone surveillée. A cette fin, le système de veille optronique est agencé pour fournir des images de l'espace surveillé à un opérateur et de traiter les images en vue d'émettre une alerte de façon automatique en cas d'intrusion dans l'espace surveillé.

Un système de veille optronique comprend généralement une unité d'acquisition comportant au moins un capteur monté derrière un zoom ayant une ligne de visée sensiblement horizontale. L'unité d'acquisition est montée pour tourner autour d'un axe sensiblement vertical et est reliée à une unité de commande agencée pour piloter l'unité d'acquisition de manière à capturer des images à la volée pendant la rotation de l'unité d'acquisition autour de l'axe vertical. Les images seront ensuite assemblées pour former des images panoramiques de l'environnement. Ceci permet de balayer l'horizon sur 360° autour de l'unité d'acquisition.

Il apparaît que ces systèmes sont d'autant plus performants que la vitesse de rotation de l'unité d'acquisition est élevée. Cependant, la vitesse de rotation est limitée en raison du temps d'intégration du capteur qui est le temps nécessaire à l'acquisition du signal image en provenance d'une scène et qui est équivalent au temps de pose en photographie. Il en résulte que si la vitesse de rotation est trop élevée, les images sont affectées d'un flou de bougé. Ceci est d'autant plus vrai avec les unités d'acquisition infrarouge utilisées dans les zones géographiques froides.

Pour remédier à cet inconvénient, il est connu de disposer devant le zoom un élément optique réfléchissant qui est monté pour tourner autour d'un axe parallèle à l'axe de rotation de l'organe d'acquisition. L'élément optique réfléchissant est en forme de polygone dont les faces parallèles à l'axe de rotation sont réfléchissantes et est entraîné en rotation dans un sens opposé au sens de rotation de l'unité d'acquisition, à une vitesse égale à la moitié de la vitesse de rotation de l'unité d'acquisition. Ainsi, les rotations opposées de l'élément optique réfléchissant et de l'unité d'acquisition permettent de maintenir sensiblement fixe la ligne de visée dans l'espace de la scène observée pendant un temps supérieur au temps d'intégration du capteur. Ces dispositifs sont lourds et encombrants. US-A1-2012/0099852, US-A1-2009/0122406 et US-B1-6486910 divulguent un système optique de lentilles avec un élément optique rotatif. JP-A-2005/175970 divulgue un système de veille optronique montée pour tourner autour d'un axe de rotation. Un but de l'invention est de proposer un système de veille alternatif à ceux connus, présentant de bonnes performances tout en étant relativement légers et compacts.

A cet effet, on prévoit, selon l'invention, un système de veille optronique, comprenant une unité d'acquisition comportant au moins un capteur monté derrière un zoom ayant à l'avant un groupe de lentilles mobiles et à l'arrière un groupe de lentilles fixes délimitant au moins un premier espace en rayons convergents, et une unité de commande reliée à l'unité d'acquisition et à un élément optique rotatif agencé pour tourner autour d'un premier axe et solidaire d'un organe d'entraînement piloté par l'unité de commande pour modifier un champ perçu par le capteur indépendamment d'un mouvement de l'unité d'acquisition autour du premier axe. L'élément optique est une première lame transparente montée dans le premier espace pour tourner autour du premier axe et l'organe d'entraînement est agencé pour faire tourner la première lame optique dans deux sens opposés.

Le groupe de lentilles mobiles forme un dispositif optique à focale variable et le groupe de lentilles fixes forme un imageur dont le facteur de grandissement dépend des lentilles utilisées. L'élément optique n'est qu'une lame transparente à faces parallèles disposée dans le groupe de lentilles fixes de manière à éviter des interférences entre les lentilles et la lame. Une modification de la position de la lame transparente par rapport à la direction des rayons provoque une translation des rayons qui la traversent et donc un déplacement angulaire du point visé par ces faisceaux sur le capteur. Le déplacement, du côté capteur, est amplifié, vis-à-vis du déplacement des rayons dans la lame, du facteur de grandissement des lentilles se trouvant entre la lame et le capteur. La lame est entraînée en rotation pour modifier le champ vu par le capteur sans mouvement de l'unité d'acquisition. Ceci permet de compenser des mouvements de l'unité d'acquisition autour du premier axe et donc d'avoir plus de temps pour acquérir une ou plusieurs images. L'unité d'acquisition est montée pour tourner autour d'un deuxième axe parallèle au premier axe selon un deuxième sens de rotation et l'unité de commande est agencée pour piloter l'unité d'acquisition pour capturer des images à la volée pendant la rotation de l'unité d'acquisition autour du deuxième axe et l'organe d'entraînement pour maintenir constant le champ perçu par le capteur pendant un temps d'acquisition d'au moins une image.

Lorsque les axes sont verticaux, le système de veille permet une observation panoramique. Dans cette application, la modification du champ est déterminée pour permettre soit une vitesse de rotation relativement élevée de l'unité d'acquisition (plus le champ est grand, plus la vitesse de rotation peut être importante) soit la capture de plusieurs images de manière à sommer les images et ainsi augmenter le rapport signal/bruit.

Selon un mode de réalisation particulier, le groupe de lentilles fixes délimite au moins un deuxième espace en rayons convergents dans lequel au moins une deuxième lame transparente est montée pour tourner autour d'un troisième axe et est solidaire d'un organe d'entraînement agencé pour faire tourner la deuxième lame transparente dans deux sens opposés et piloté par l'unité de commande pour modifier un champ perçu par le capteur indépendamment d'un mouvement de l'unité d'acquisition autour du troisième axe, le troisième axe étant sensiblement perpendiculaire au deuxième axe.

L'utilisation d'une deuxième lame est particulièrement avantageuse car elle permet de modifier le champ selon une autre direction par exemple, dans le cas d'une observation panoramique, pour compenser un positionnement non vertical du deuxième axe ou pour fournir une stabilisation de la visée.

Avantageusement, l'unité de commande est agencée pour commander la rotation de la lame et le capteur pour capturer au moins deux images successives d'une même portion de scène et de sommer ces images pour obtenir une image reconstituée de même résolution que les images successives.

La sommation des images permet d'augmenter le rapport signal sur bruit et donc la qualité des images.

En variante, l'unité de commande est agencée pour commander la rotation de la lame et le capteur pour capturer des images successives d'une même portion de scène.

Il est alors possible de traiter les images de manière à sommer des pixels de ces images pour obtenir une image reconstituée de plus faible résolution que les images successives. Cette diminution de la résolution n'est pas forcément gênante car dans beaucoup d'applications le volume de données image est si important qu'il impose de compresser les données pour permettre leur affichage. La diminution de résolution serait donc de toute façon réalisée.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue schématique en perspective d'un système optronique conforme à l'invention ;
- la figure 2 est une vue schématique d'un système optronique selon l'invention, vu de côté perpendiculairement à l'axe optique.

En référence aux figures, le système de veille optronique comprend une unité d'acquisition 1 comportant au moins un capteur 2 monté derrière un zoom 3 ayant à l'avant un groupe de lentilles mobiles 4 et à l'arrière un groupe de lentilles fixes 5 délimitant au moins un premier espace 6 en rayons convergents et au moins un deuxième espace 7 en rayons convergents. Certaines des lentilles du groupe de lentilles mobiles 4 sont associées, de manière connue en elle-même, à un dispositif de motorisation 8 pour régler l'agrandissement et la position du point focal.

L'unité d'acquisition 1 est montée pour pivoter sur un bâti autour d'un axe A1 s'étendant ici verticalement. Un dispositif de motorisation 9 est monté sur le bâti pour entraîner l'unité d'acquisition 1 en rotation autour de l'axe A1.

Le système comprend une unité de commande 10 reliée au capteur 2 et aux dispositifs de motorisation 8, 9 pour commander ceux-ci.

Le système de veille comprend une première lame optique 11 montée dans le premier espace 6 pour tourner autour d'un axe A2 et une deuxième lame optique 12 montée dans le deuxième espace 7 pour tourner autour d'un axe A3. L'axe A3 est sensiblement perpendiculaire à l'axe A2. Chaque lame optique 11, 12 est solidaire d'un arbre de sortie d'un moteur d'entraînement 13, 14 pour faire tourner la lame optique 11, 12 dans deux sens opposés autour de l'axe A2, A3.

L'unité de commande 10 est reliée aux moteurs d'entraînement 13, 14 pour commander ceux-ci.

L'unité de commande 10 est agencée pour piloter l'unité d'acquisition 1 pour capturer des images à la volée pendant la rotation de l'unité d'acquisition 1 autour de l'axe A1.

L'unité de commande 10 est agencée pour piloter l'organe d'entraînement 13 de manière à modifier un champ perçu par le capteur 2 indépendamment d'un mouvement de l'unité d'acquisition 1 autour de l'axe A2. L'unité de commande 10 est ici plus précisément agencée pour piloter le moteur d'entraînement 13 pour maintenir constant le champ perçu par le capteur 2 pendant un temps d'acquisition d'au moins une image et pendant la rotation de l'unité d'acquisition 1 autour de l'axe A1.

L'unité de commande 10 est agencée pour modifier un champ perçu par le capteur 2 indépendamment d'un mouvement de l'unité d'acquisition 1 autour de l'axe A3. Plus précisément, lorsque l'axe A1 n'est pas tout-à-fait vertical (le véhicule sur lequel le système optronique est monté est en dévers par exemple) et qu'un balayage horizontal est souhaité, l'unité de commande 10 est agencée pour régler la ligne de visée en site de telle manière que la ligne de visée parcoure un plan sensiblement horizontal.

En fonctionnement normal, le moteur d'entraînement 13 de la lame 11 est pilotés de manière à bloquer la visée dans une direction spatiale fixe le temps de l'acquisition d'une image (la lame 11 est alors entrainée dans un sens de rotation opposé à celui de l'unité d'acquisition 1) puis à repositionner la lame 11 pour l'acquisition de l'image suivante (la lame 11 est alors entrainée dans le même sens de rotation que l'unité d'acquisition 1 mais plus vite).

S'il y a un dévers du véhicule, il faut que la caméra soit pointée autour d'un axe de site déterminé pour compenser le dévers lors de la rotation en gisement autour de l'axe A1. La première lame 11 est pilotée autour de l'axe A2 pour compenser le mouvement de la visée autour de l'axe A1. La deuxième lame 12 est pilotée autour de l'axe A3 pour compenser le mouvement de la visée autour de l'axe de site déterminé.

L'unité de commande 10 est en outre agencée pour effectuer des opérations de traitement d'images visant à assembler les images capturées pour former un bandeau d'images qui corresponde à un panorama de 360° autour de l'axe A1 et qui puisse ensuite être affiché sur un écran adapté. Les images sont capturées à une fréquence propre à provoquer un chevauchement marginal des images entre elles de telle manière que le chevauchement puisse être détecté par l'unité de commande 10 et utilisé pour raccorder les images les unes aux autres sur un tour de l'unité d'acquisition 1.

Dans un premier mode de mise en oeuvre de l'invention, l'unité de commande 10 est agencée pour commander la rotation de la lame 11 et le capteur 2 pour capturer au moins deux images successives d'une même portion de scène et de sommer ces images pour obtenir une image reconstituée de même résolution. Ces opérations de captures successives sont réalisées sur un tour complet de l'unité d'acquisition 1 pour obtenir suffisamment d'images reconstituées. Le bandeau d'images est ensuite formé à partir des images reconstituées. On réalise donc une accumulation de trames, permettant d'améliorer le rapport signal sur bruit.

Dans un deuxième mode de mise en oeuvre de l'invention, l'unité de commande 10 est agencée pour commander la rotation de la lame 11 et le capteur 2 pour capturer des images successives d'une même portion de scène et sommer des pixels de ces images pour obtenir une image reconstituée de plus faible résolution. Par exemple, par une opération de traitement suivant l'acquisition, chaque pixel de l'image reconstituée est le résultat de la sommation de quatre pixels des images successives. Ces opérations sont réalisées sur un tour complet de l'unité d'acquisition 1 pour obtenir suffisamment d'images reconstituées. Le bandeau d'images est ensuite formé à partir des images reconstituées (on parle de procédé E-bining).

De préférence, l'unité de commande 10 est agencée pour fonctionner selon ces deux modes de mise en oeuvre et sélectionne le mode de mise en oeuvre par exemple en fonction des conditions de prise de vue. Ces modes de mise en oeuvre sont utilisés lorsque les temps d'intégration sont longs, par exemple en infrarouge lorsque la température est basse.

Bien entendu, l'invention n'est pas limitée aux modes de réalisation décrits mais englobe toute variante entrant dans le champ de l'invention telle que définie par les revendications.

L'invention est applicable à tout système de veille optronique quelles que soient les longueurs d'onde considérées, par exemple dans le domaine visible et l'infrarouge.

Avantageusement, les lames sont en outre utilisées pour assurer une stabilisation optique du zoom.

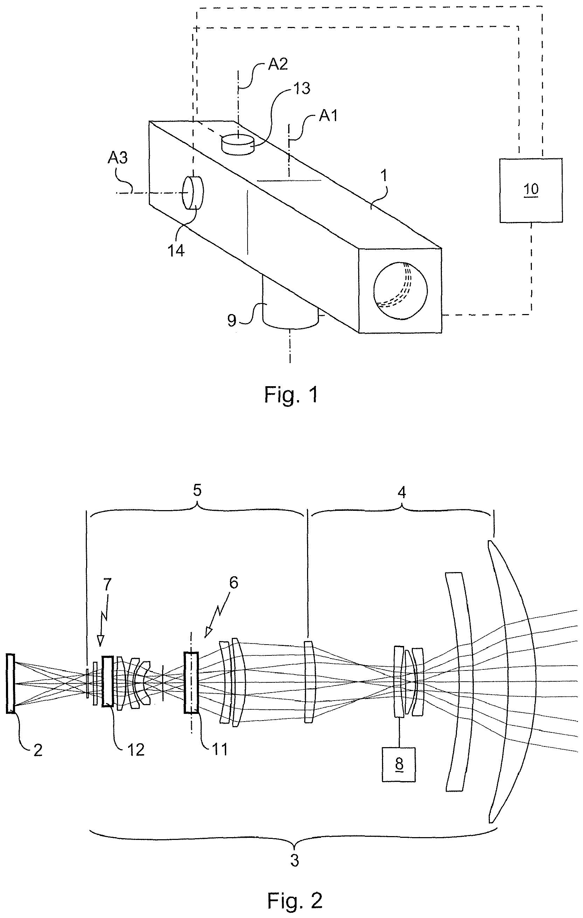

Le zoom peut avoir une formule optique plus complexe ou plus simple que celle représentée sur la figure 2.

## Revendications

1. Système de veille optronique, comprenant une unité d'acquisition (1) comportant au moins un capteur (2) monté derrière un zoom (3) ayant à l'avant un groupe de lentilles mobiles (4) et à l'arrière un groupe de lentilles fixes (5) délimitant au moins un premier espace (6) en rayons convergents, et une unité de commande (10) reliée à l'unité d'acquisition (1) et à un élément optique rotatif (11) agencé pour tourner autour d'un premier axe (A2) et solidaire d'un organe d'entraînement piloté par l'unité de commande (10) pour modifier un champ perçu par le capteur (2) indépendamment d'un mouvement de l'unité d'acquisition (1) autour d'un axe, **caractérisée en ce que** l'élément optique rotatif (11) est une première lame transparente montée dans le premier espace (6) pour tourner autour du premier axe (A2) et l'organe d'entraînement est agencé pour faire tourner la première lame transparente dans deux sens opposés, l'unité d'acquisition (1) étant montée pour tourner autour d'un deuxième axe (A1) parallèle au premier axe (A2) selon un deuxième sens de rotation et l'unité de commande (10) est agencée pour piloter l'unité d'acquisition (1) pour capturer des images à la volée pendant la rotation de l'unité d'acquisition (1) autour du deuxième axe (A1) et l'organe d'entraînement pour maintenir constant le champ perçu par le capteur (2) pendant un temps d'acquisition d'au moins une image.

2. Système selon la revendication 1, dans lequel le premier (A2) et le deuxième (A1) axe sont sensiblement verticaux.

3. Système selon la revendication 1 ou 2, dans lequel le groupe de lentilles fixes (5) délimite au moins un deuxième espace (7) en rayons convergents dans lequel au moins une deuxième lame transparente (12) est montée pour tourner autour d'un troisième axe (A3) et est solidaire d'un organe d'entraînement agencé pour faire tourner la deuxième lame transparente (12) dans deux sens opposés et piloté par l'unité de commande (10) pour modifier un champ perçu par le capteur (2) indépendamment d'un mouvement de l'unité d'acquisition (1) autour du troisième axe (A3), le troisième axe (A3) étant sensiblement perpendiculaire au deuxième axe (A1).

4. Système selon la revendication 1, dans laquelle l'unité de commande (10) est agencée pour commander la rotation de la lame transparente et le capteur (2) pour capturer au moins deux images successives d'une même portion de scène et de sommer ces images pour obtenir une image reconstituée de même résolution que les images successives.

5. Système selon la revendication 1, dans laquelle l'unité de commande (10) est agencée pour commander la rotation de la lame transparente et le capteur (2) pour capturer des images successives d'une même portion de scène.

## Patentansprüche

1. Optoelektronisches Überwachungssystem, umfassend eine Erfassungseinheit (1), die mindestens einen Sensor (2) enthält, der hinter einem Zoomobjektiv (3) angebracht ist, das vorne eine Gruppe von beweglichen Linsen (4) und hinten eine Gruppe von feststehenden Linsen (5) hat, die mindestens einen ersten Raum (6) aus konvergierenden Strahlen begrenzen, und eine Steuereinheit (10), die mit der Erfassungseinheit (1) und mit einem drehbaren optischen Element (11) verbunden ist, das so ausgebildet ist, dass es sich um eine erste Achse (A2) dreht und mit einem Antriebsorgan verbunden ist, das von der Steuereinheit (10) gesteuert wird, um ein Feld, das von dem Sensor (2) erfasst wird, unabhängig von einer Bewegung der Erfassungseinheit (1) um eine Achse zu verändern, **dadurch gekennzeichnet, dass** das drehbare optische Element (11) eine erste transparente Scheibe ist, die in dem ersten Raum (6) gelagert ist, um sich um die erste Achse (A2) zu drehen, und das Antriebsorgan so ausgebildet ist, dass es die erste transparente Scheibe in zwei entgegengesetzte Richtungen dreht, wobei die Erfassungseinheit (1) drehbar um eine zur ersten Achse (A2) parallele zweite Achse (A1) in einer zweiten Drehrichtung gelagert ist und die Steuereinheit (10) so ausgebildet ist, dass sie die Erfassungseinheit (1) steuert, um Bilder momentan während der Drehung der Erfassungseinheit (1) um die zweite Achse (A1) zu erfassen, und das Antriebsorgan, um das von dem Sensor (2) erfasste Feld während einer Erfassungszeit von mindestens einem Bild konstant zu halten.

2. System nach Anspruch 1, bei dem die erste Achse (A2) und die zweite Achse (A1) im Wesentlichen vertikal sind.

3. System nach Anspruch 1 oder 2, bei dem die Gruppe aus feststehenden Linsen (5) mindestens einen zweiten Raum (7) aus konvergierenden Strahlen begrenzt, in dem mindestens eine zweite transparente Scheibe (12) drehbar um eine dritte Achse (A3) gelagert und mit einem Antriebsorgan verbunden ist, das so ausgebildet ist, dass es die zweite transparente Scheibe (12) in zwei entgegengesetzte Richtungen dreht und von der Steuereinheit (10) gesteuert wird, um ein Feld, das von dem Sensor (2) erfasst wird, unabhängig von einer Bewegung der Erfassungseinheit (1) um die dritte Achse (A3) zu verändern, wobei die dritte Achse (A3) im Wesentlichen senkrecht zur zweiten Achse (A1) ist.

4. System nach Anspruch 1, bei dem die Steuereinheit (10) so ausgebildet ist, dass sie die Drehung der transparenten Scheibe und den Sensor (2) steuert, um mindestens zwei aufeinanderfolgende Bilder eines gleichen Szenenabschnittes zu erfassen und diese Bilder zu summieren, um ein rekonstruiertes Bild mit gleicher Auflösung wie die aufeinanderfolgenden Bilder zu erhalten.

5. System nach Anspruch 1, bei dem die Steuereinheit (10) so ausgebildet ist, dass sie die Drehung der transparenten Scheibe und den Sensor (2) steuert, um aufeinanderfolgende Bilder eines gleichen Szenenabschnittes zu erfassen.

## Claims

1. An optoelectronic surveillance system, comprising an acquisition unit (1) including at least one sensor (2) mounted behind a zoom (3) having a group of movable lenses (4) at the front and a group of fixed lenses (5) at the rear, defining at least one first space (6) in the convergent rays, and a control unit (10) connected to the acquisition unit (1) and to a rotary optical element (11) arranged so as to rotate about a first axis (A2) and secured to a drive member controlled by the control unit (10) in order to modify a field perceived by the sensor (2) independently of a movement of the acquisition unit (1) about an axis, **characterised in that** the optical element (11) is a first transparent plate mounted in the first space (6) so as to rotate about the first axis (A2), and the drive member is arranged so as to rotate the transparent optical plate in two opposite directions, the acquisition unit (1) being mounted so as to turn about a second axis (A1) parallel to the first axis (A2) in a second rotation direction and the control unit (10) is arranged so as to control the acquisition unit (1) in order to capture images on the fly during the rotation of the acquisition unit (1) about the second axis (A1) and the drive member in order to keep constant the field perceived by the sensor (2) during a time of acquisition of at least one image.

2. A system according to claim 1, in which the first (A2) and second (A1) axes are substantially vertical.

3. A system according to claim 1 or 2, in which the group of fixed lenses (5) delimits at least a second space (7) with convergent rays in which at least one second transparent plate (12) is mounted so as to turn about a third axis (A3) and is secured to a drive member arranged so as to rotate the second transparent blade (12) in two opposite directions and controlled by the control unit (10) so as to modify a field perceived by the sensor (2) independent of a movement of the acquisition unit (1) about the third axis (A3), the third axis (A3) being substantially perpendicular to the second axis (A1).

4. A system according to claim 1, in which the control unit (10) is arranged so as to control the rotation of the transparent plate and the sensor (2) in order to capture at least two successive images of the same scene portion and to add these images in order to obtain a reconstituted image with the same resolution as the successive images.

5. A system according to claim 1, in which the control unit (10) is arranged so as to control the rotation of the transparent plate and the sensor (2) in order to capture successive images of the same scene portion.
